# EUROPEAN PATENT SPECIFICATION

(11) **EP 3 657 153 B1**
(45) Date of publication and mention of the grant of the patent: **27.09.2023**
(21) Application number: 19747226.9
(22) Date of filing: 29.01.2019
(51) Int. Cl.: G01N 1/36, A47B 21/03, B01L 99/00, A47B 97/00, G01N 1/28, B01L 9/02

(54) **WRIST REST AND WRIST-REST CUSHION**
HANDGELENKSTÜTZE UND HANDGELENKSTÜTZKISSEN
REPOSE-POIGNET ET COUSSIN REPOSE-POIGNET

(30) Priority: 01.02.2018 JP 2018016565
(43) Date of publication of application: 27.05.2020
(73) Proprietor: Sakura Seiki Co., Ltd, Chikuma-shi, Nagano 387-0015 (JP); Sakura Finetek Japan Co., Ltd., Tokyo 103-0023 (JP)
(72) Inventor: TAKEHANA, Akira, Chikuma-shi, Nagano 387-0015 (JP)
(74) Representative: Mewburn Ellis LLP
(86) International application number: PCT/JP2019/002911
(87) International publication number: WO 2019/151223

(56) References cited:
- WO-A1-2018/150986
- CN-A- 104 048 871
- DE-U1- 29 502 499
- JP-A- 2002 318 177
- JP-A- 2002 318 177
- JP-A- 2006 028 953
- SE-C2- 518 152
- US-A- 5 170 971
- US-A1- 2007 114 341
- US-A1- 2009 318 751
- US-A1- 2011 076 753

## Description

### Technical Field

The present invention relates to a wrist rest detachably attached onto an embedding apparatus for dispensing an embedding material into an embedding tray to embed the embedding material, and a wrist-rest cushion detachably attached onto the wrist rest.

### Background Art

In preparing a microscopic specimen of a tissue fragment (sample) collected from a human body or the like, it is necessary to cut the tissue fragment thinly. However, the tissue fragments are generally soft and cannot be cut off thinly. In this configuration, it is necessary to properly harden the tissue fragment with an embedding material (paraffin) to make them easy to cut out. This step is commonly referred to as embedding.

Incidentally, embedding pretreatment (fixing of a tissue fragment, dehydration, degreasing and paraffin penetration) of the collected tissue fragment is widely carried out automatically owing to the spread of an automatic fixing and embedding apparatus. In contrast, embedding of the tissue fragment is mainly performed manually as it requires precise positioning and fixation.

An embedding apparatus is an apparatus that assists in a manual embedding operation (see PTL 1: JP-A-2002-318177). An operator sits in opposition to the apparatus and dispenses a molten paraffin supplied from a dispenser into an embedding tray. A tissue fragment is then placed in the embedding tray. Next, while holding tweezers with one hand and holding the embedding tray with the other hand, the paraffin is solidified on a cooling plate called a cold spot to fix the position of the tissue fragment.
PTL 2: US 5,170,971 describes a wrist support for installation in an edge of a work surface.
PTL 3: DE 295 02 499 describes an armrest suitable for attachment to a work table.
PTL 4: US 2009/0318751 describes a removable perforated wrist rest which is positioned above a perforated region of the table.

### Citation Lists

### Patent Literature

PTL 1: JP-A-2002-318177
PTL 2: US 5,170,971
PTL 3 : DE 295 02 499
PTL 4: US 2009/0318751

### Summary of Invention

### Technical Problem

In other words, since the embedding is a precise operation performed manually, an embedding apparatus provided with a hand-rest part or a wrist-rest part for the operator to place his or her hand is practically used. As used herein the term "hand-rest part" is intended to mean a flat plate-shaped configuration provided on the embedding apparatus for supporting the hand of the operator. As used herein the term "wrist-rest part" is intended to mean a configuration protruding upward at the position of the hand-rest part with a predetermined thickness. These configurations contribute to reduce fatigue of the hand or allow precise operations to be carried out easily by supporting the hand of the operator. However, determination of, for example, which one of these configurations for placing the hand makes the operation easier is different depending on the operator. Therefore, the embedding apparatus provided with either the hand-rest part or the wrist-rest part does not make all the operators satisfy in terms of operability. Therefore, a wrist rest (a detachable and attachable component, discriminated from the "wrist-rest part" as a part of the embedding apparatus) or a wrist-rest cushion which is configured to detachably attached onto the hand-rest part and is easily adjustable in thickness on the hand-rest position is required.

### Solution to Problem

In view of the above circumstances, it is an object of the present invention to provide a wrist rest which is detachably attached onto a hand-rest part of an embedding apparatus and which can be easily and selectively adjustable in thickness on the hand-rest part.

The present invention solves the above problems by means of a solution as described below in one embodiment.

The wrist rest according to the present invention is a wrist rest to be detachably attached onto an embedding apparatus configured to dispense and embed an embedding material into an embedding tray including: an attachment mechanism configured to attach the wrist rest onto a hand-rest part of the embedding apparatus at a position covering the hand-rest part entirely or partly.

In this configuration, wrist rest detachable and attachable onto the hand-rest part is achieved by the attachment mechanism. Therefore, the thickness of the mechanism for placing the hand at the time of embedding operation can be selectively adjusted, so that an improvement of operability is achieved.

The attachment mechanism is an engaging piece which is disposed at front and rear positions or at right and left positions of the wrist rest with the hand-rest part interposed therebetween and is an engaging piece configured to engage a predetermined portion of the embedding apparatus. In this configuration, attachment and detachment of the wrist rest is achieved easily by using an engagement mechanism.

The engagement piece is formed by using both an engagement groove which a protrusion disposed at a predetermined portion of the embedding apparatus engages, and an engagement protrusion which an engagement hole disposed at a predetermined portion of the embedding apparatus engages. In this configuration, attachment and detachment of the wrist rest is achieved easily by causing the engagement groove to engage the protrusion or causing the engagement protrusion to engage the engagement hole.

Preferably, a top surface is formed in an inclined shape declining toward an end of the embedding apparatus. In this configuration, the hand can be placed on the wrist rest in a reasonable position.

Preferably, a lid opening mechanism for opening a lid of a cassette configured to accommodate a sample is provided, and the lid opening mechanism includes one end provided at a position lower than a bottom surface of the lid in a state in which the cassette closed by the lid is placed at a predetermined position on a hot plate configured to heat the embedding tray, and an inclined surface extending from the one end to a position higher than the bottom surface of the lid. In this configuration, the wrist rest may be provided with the lid opening mechanism which allows a step of opening the lid of the cassette to be performed with one hand.

Preferably, the inclined surface is inclined in a front-rear direction parallel to a direction opposing the cassette. In this configuration, the wrist rest may be provided with the lid opening mechanism which allows opening of the lid of the cassette to be performed only by moving the cassette so as to pull forward with one hand.

Preferably, the lid opening mechanism includes a flip-flop preventing part formed into a canopy top shape above a position of the inclined surface in the vicinity of a portion aligned in height with the bottom surface of the lid. In this configuration, the wrist rest may be provided with the lid opening mechanism in which the flip-flop movement of the lid is prevented by bringing the upper surface of the lid in contact with a lower surface of the flip-flop preventing part when the lid flips up with an opening force of the lid of the cassette, and thus splashing of the sample that may occur in association with the flip-flop movement of the lid may be prevented.

In another example not forming part of the present invention, preferably, the attachment mechanism is a pressure-sensitive adhesive surface formed by using a pressure-sensitive adhesive material provided on a bottom surface portion. In this configuration, attachment and detachment of the wrist rest can be carried out easily by sticking and peeling the wrist rest bottom surface portion onto and from the hand-rest part.

Preferably, an elastic material is provided between a top surface portion and the bottom surface portion. Cushioning property may be enhanced by causing the wrist rest to generate elasticity.

Preferably, the top surface portion is made of a resin material having a convex shape protruding upward, and the bottom surface portion is made of a resin material which also serves as both the elastic material and the pressure-sensitive adhesive material. In this configuration, the entire part may be maintained to have a protruding shape while providing a central portion with elasticity.

Preferably, the wrist-rest cushion according to the present invention is a wrist-rest cushion detachably attached onto the wrist rest and includes an attachment mechanism for attaching the wrist-rest cushion in an arrangement covering the wrist rest entirely or partly. In this configuration, the thickness of the wrist rest can be adjusted easily.

Preferably, the attachment mechanism is a pressure-sensitive adhesive surface formed by using a pressure-sensitive adhesive material provided on a bottom surface portion. In this configuration, attachment and detachment of the wrist-rest cushion can be carried out easily by sticking and peeling the wrist-rest cushion bottom surface portion to and from the wrist rest.

Preferably, an elastic material is provided between a top surface portion and the bottom surface portion. In this configuration, cushioning property may be enhanced by causing the wrist-rest cushion to generate elasticity.

Preferably, the top surface portion is made of a resin material having a convex shape protruding upward, and the bottom surface portion is made of a resin material which also serves as both the elastic material and the pressure-sensitive adhesive material. In this configuration, the entire part may be maintained to have a protruding shape while providing a central portion with elasticity.

### Advantageous Effects of Invention

According to the present invention, the wrist rest detachable from and attachable to the hand-rest part on the embedding apparatus is achieved by the attachment mechanism. In this configuration, the thickness on the hand-rest part can be adjusted easily and selectively.

### Brief Description of Drawings

Fig. 1 is a plan view (schematic drawing) illustrating a basic configuration of an embedding apparatus.
Fig. 2 is a side view (schematic drawing) of the embedding apparatus illustrated in Fig. 1.
Fig. 3 is a perspective view (schematic drawing) illustrating an example in which a wrist rest according to a first embodiment of the present invention is attached to the embedding apparatus illustrated in Fig. 1.
Fig. 4 is a perspective view illustrating an example of the wrist rest according to the first embodiment.
Fig. 5 is a side view of the wrist rest illustrated in Fig. 4.
Figs. 6A and 6B are cross-sectional views illustrating an example of an attachment mechanism of the wrist rest illustrated in Fig. 4.
Fig. 7 is a perspective view illustrating another example of the wrist rest according to the first embodiment.
Fig. 8 is a cross-sectional view illustrating an example of a lid opening mechanism of the wrist rest illustrated in Fig. 7.
Fig. 9 is a perspective view illustrating an example of a cassette configured to accommodate a sample.
Fig. 10 is a perspective view (schematic drawing) illustrating an example in which a wrist rest, which is not according to present invention, is attached to the embedding apparatus illustrated in Fig. 1.
Fig. 11 is a plan view illustrating an example of the wrist rest according to the second example.
Fig. 12 is a cross-sectional view of the wrist rest illustrated in Fig. 11.
Fig. 13 is a perspective view (schematic drawing) illustrating an example in which a wrist-rest cushion according to an embodiment of the present invention is attached to the wrist rest in the embedding apparatus illustrated in Fig. 10. Description of Embodiments

### [Wrist Rest] (First Embodiment).

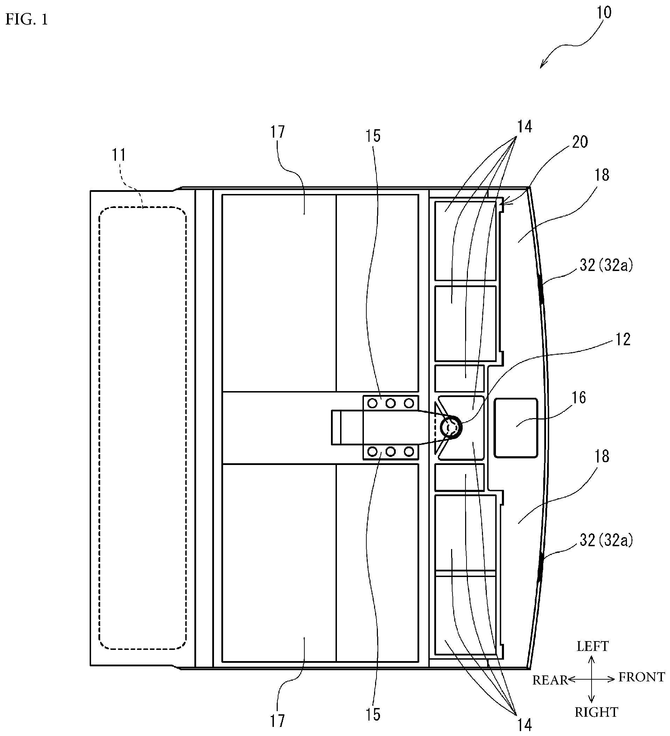

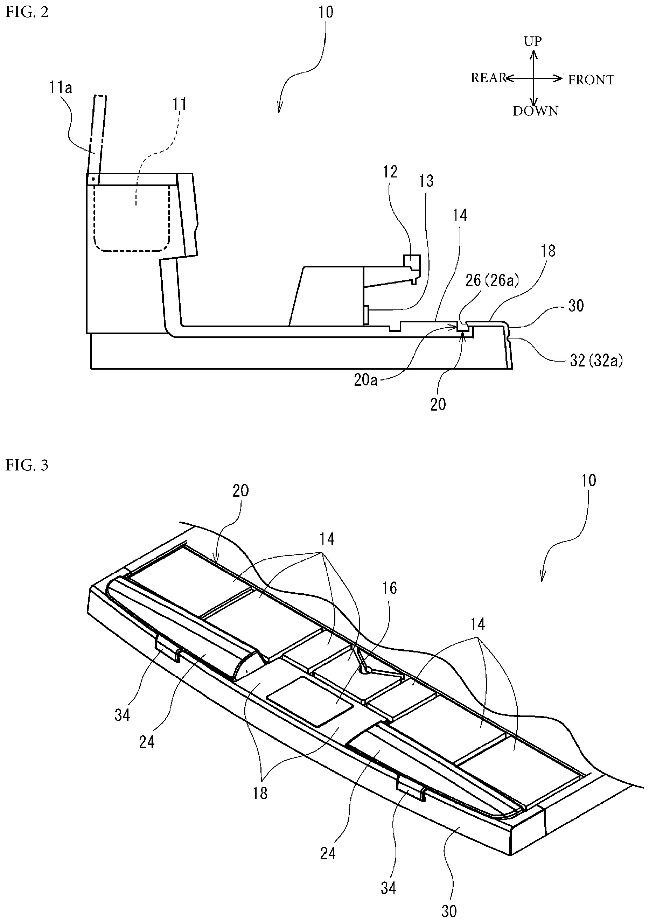

Hereinafter, referring to the drawings, a first embodiment according to the present invention will be described in detail. Fig. 1 is a plan view (schematic drawing) illustrating a basic configuration of an embedding apparatus 10 to which a wrist rest 24 according to an embodiment of the present invention is attached, and Fig. 2 is a side view (schematic drawing) thereof. It should be noted that, for convenience of description, front and rear, right and left, and vertical directions of the embedding apparatus 10 are indicated by arrows in the drawings. In all drawings used in describing the embodiments, the same reference numerals will be given to members having the same function, and repeated description thereof will be omitted in some cases.

First, a configuration of the embedding apparatus 10 having a hand-rest part 18 to which the wrist rest 24 is attached will be outlined.

The embedding apparatus 10 illustrated in Fig. 1 and Fig. 2 comprises a storage tank 11 in which paraffin as an embedding material is melted and stored. Further, a needle valve 12 serving as a flow control valve located below the liquid level of the molten paraffin stored in the storage tank 11, and an open/close switch 13 for an open/close valve provided in the middle of piping connecting the storage tank 11 to the needle valve 12 are provided. A cover 11a is mounted to be openable and closable on top of the storage tank 11, and a supply of paraffin or the like to the storage tank 11 can be performed by opening the cover 11a.

A plurality of hot plates 14 configured to heat an embedding tray or the like configured to store a sample are provided at the center and on the left and right of the needle valve 12. On the other hand, holders 15 configured to heat an instrument such as tweezers used for taking out a sample from a cassette 42 are provided in left and right rear portions in the vicinity of the needle valve 12.

Further, a cold spot 16 cooled by a Peltier element is provided in front of the needle valve 12. The cold spot 16 is used to solidify the molten paraffin filled in an embedding tray in which a sample is stored. The hand-rest part 18 extends to ends of the embedding apparatus on the left and right sides with the cold spot 16 interposed therebetween.

On the other hand, a heating tank 17 configured to accommodate and warm the embedding tray and a sample is provided at the rear of the needle valve 12 on the right and left sides.

Each of the hot plates 14 is partitioned by being surrounded at four sides by an inflow groove 20 having a rail shape. The inflow groove 20 allows the leaked paraffin to flow therethrough and be stored in a waste liquid paraffin tray (not illustrated) provided at the lower portion.

In order to allow an operator to perform the operation regardless of the dominant hand (right hand, left hand) of the operator, the embedding apparatus 10 is configured such that each mechanism is arranged symmetrically with respect to the needle valve 12.

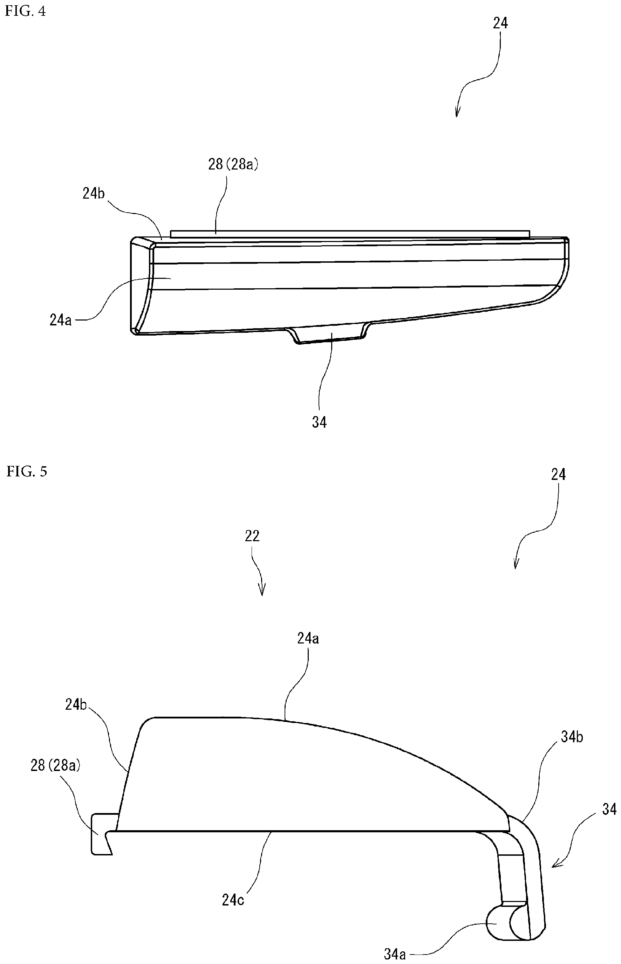

Subsequently, the wrist rest 24 according to the present embodiment will be described. Fig. 4 is a perspective view illustrating an example of the wrist rest 24, and Fig. 5 is a side view thereof. Fig. 3 is a perspective view (schematic drawing) illustrating an example in which the wrist rest 24 is attached to the embedding apparatus 10. Although the wrist rest 24 has a pair of configurations arranged symmetrically, only one of them is illustrated and described because the contents thereof overlap with each other.

The wrist rest 24 illustrated in Figs. 4 and 5 is formed in the shape of a wing extending to the left and right sides. Also, the left and right lengths are formed to be shorter than the hand-rest part 18. In this configuration, when the wrist rest 24 is attached onto the hand-rest part 18 along an end of the embedding apparatus 10, the hand-rest part 18 can remain to a certain extent on both left and right sides sandwiching the cold spot 16 (see Fig. 3). Therefore, the operator can place mainly the wrist on the wrist rest 24 and place a part ahead of the wrist on the hand-rest part 18, so that the hand can be placed on the wrist rest 24 in a reasonable position.

Further, the wrist rest 24 is formed in an inclined shape in which a top surface 24a is lowered toward the end of the embedding apparatus 10 and is formed in an inclined shape declining toward the front. In this configuration, the hand can be placed on the wrist rest 24 further in a reasonable position.

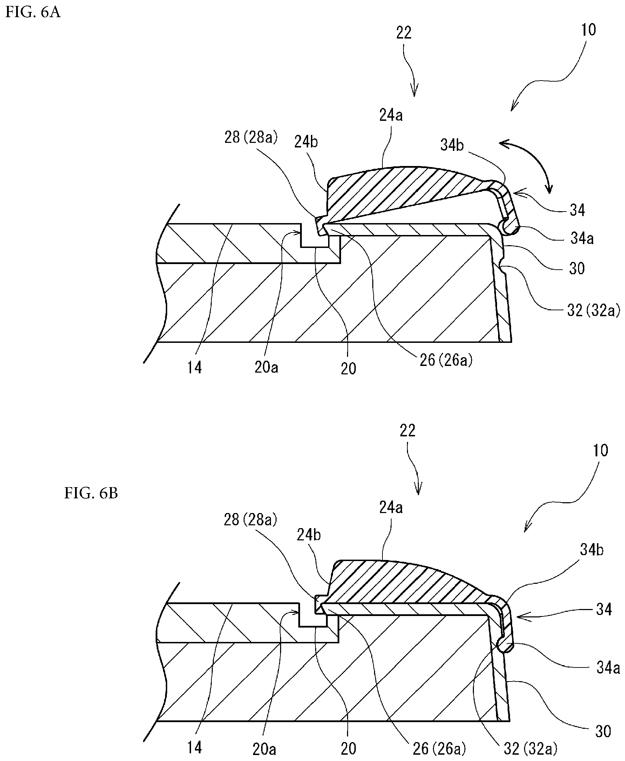

Subsequently, an attachment mechanism 22 for the wrist rest 24 will be described. The attachment mechanism 22 for the wrist rest 24 according to the present embodiment corresponds to engagement pieces (a third engagement piece 34 and a fourth engagement piece 28) which engage engagement pieces (a first engagement piece 32 and a second engagement piece 26) disposed at a predetermined portion of the embedding apparatus 10. Therefore, the mechanism in the embedding apparatus 10 will be described as appropriate. Figs. 6A and 6B are cross-sectional views illustrating the attachment mechanism of the wrist rest 24, Fig. 6A illustrates a rear mechanism in an engaged state, and Fig. 6B illustrates the wrist rest 24 attached onto the hand-rest part 18 by engaging the rear and front mechanisms.

The inflow groove 20 provided between the hand-rest part 18 of the embedding apparatus 10 and the hot plate 14 located behind the hand-rest part 18 includes a protrusion 26a protruding rearward at an upper end of an inner wall part 20a on a side closer to the hand-rest part 18 (see Figs. 2 and 6A). The protrusion 26a is configured as the second engagement piece 26 which the fourth engagement piece 28 on the wrist rest 24, which will be described later, engages.

On the other hand, a hook-shaped engagement groove 28a is provided to extend to the left and right at a lower end of a rear edge portion 24b of the wrist rest 24 (see Figs. 4 and 5). The engagement groove 28a is configured as the fourth engagement piece 28 that engages the second engagement piece 26 in the aforementioned hand-rest part. Therefore, the engagement groove 28a is provided to be capable of engaging the protrusion 26a of the second engagement piece 26. In other words, the hook shape of the engagement groove 28a is formed to match the shape of the protrusion 26a. In this configuration, as illustrated in Fig. 6A, the wrist rest 24 is freely movable up and down with the engagement groove 28a in engagement with the protrusion 26a.

It should be noted that, although the engagement mechanism at the rear portion of the wrist rest 24 according to the present embodiment is extended from the center to the left and right as an example, the size (length), the position, and the number are not limited thereto.

A recessed engagement hole 32a having a required length and a required width is formed in an apparatus front wall 30 extending downward from a front end of the hand-rest part 18 of the embedding apparatus 10 (see Figs. 2 and 6A). The engagement hole 32a is configured as the first engagement piece 32 which the third engagement piece 34 on the wrist rest 24, which will be described later, engages.

On the other hand, at a lower end of the front portion of the wrist rest 24, the third engagement piece 34 protruding downward by an L-shape is provided (see Figs. 4 and 5). The third engagement piece 34 has a required length and a required width and, in addition, includes an engagement protrusion 34a protruding inward formed at the lower end.

The wrist rest 24 here is made of a material elastically deformable in the inward and outward direction at an L-shaped bent portion 34b. In this configuration, when the wrist rest 24 is moved downward with the second engagement piece 26 in engagement with the fourth engagement piece 28, the third engagement piece 34 can be deflected outward and lowered along the apparatus front wall 30. Therefore, a bottom surface portion 24c of the wrist rest 24 can be brought into contact with the hand-rest part 18. Examples of the material that can be used for the wrist rest 24 include resin materials such as polyamide 6 (PA6).

On the other hand, the engagement hole 32a on the front side of the hand-rest part 18 is provided to be capable of engaging the engagement protrusion 34a of the third engagement piece 34 on the wrist rest 24. In other words, the engagement hole 32a is provided at a position where the engagement protrusion 34a comes into contact with the apparatus front wall 30 when the wrist rest 24 is moved downward with the second engagement piece 26 in engagement with the fourth engagement piece 28 and the bottom surface portion 24c of the wrist rest 24 is brought into contact with the hand-rest part 18. In this configuration, when the bottom surface portion 24c of the wrist rest 24 is brought into contact with the hand-rest part 18, the engagement protrusion 34a can be brought into engagement with the engagement hole 32a.

In other words, the third engagement piece 34 and the first engagement piece 32 constitute an engagement mechanism by snap fitting. In this configuration, the engagement or separation is achieved easily.

It should be noted that, although one engagement mechanism is provided at the center of the front portion of the wrist rest 24 according to the present embodiment as an example, the size, (length), the position, and the number are not limited thereto.

According to the configuration described above, the first engagement piece 32 can engage or separate from the third engagement piece 34 by moving the wrist rest 24 up and down with the fourth engagement piece 28 in engagement with the second engagement piece 26. As a result, attachment and detachment of the wrist rest 24 is achieved easily.

Further, since the first engagement piece 32 and the second engagement piece 26 relating to the attachment and detachment of the wrist rest 24 are not provided on the hand-rest part 18, such a defect that the hand (glove) of the operator is caught by the engagement mechanism when using the hand-rest part 18 may be avoided.

Although the engagement mechanism of the wrist rest 24 according to the present embodiment is disposed at the front and rear positions with the hand-rest part 18 interposed therebetween, it is also possible to dispose the engagement mechanism of the wrist rest 24 at the left and right positions. It is also possible to configure the attachment mechanism by using only one of the two engagement mechanisms (first engagement piece and third engagement piece, and second engagement piece and fourth engagement piece).

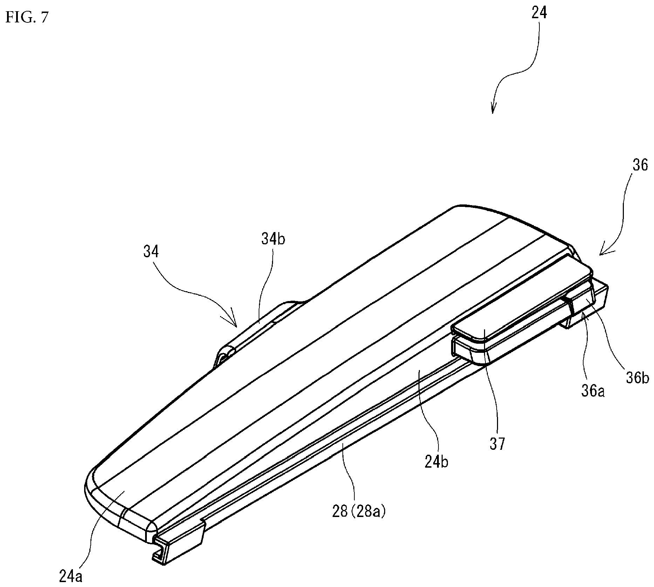

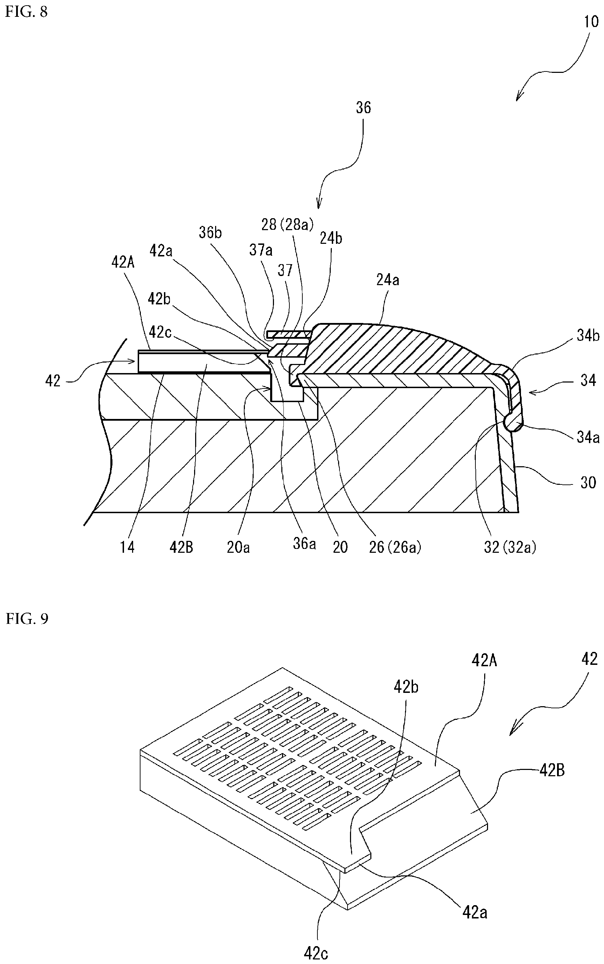

As a modified example, the wrist rest 24 according to the present embodiment may be provided with a lid opening mechanism 36 capable of opening a lid 42A of the cassette 42 configured to accommodate a sample with one hand. Fig. 7 is a perspective view illustrating an example of the wrist rest 24 provided with the lid opening mechanism 36, and Fig. 8 is a cross-sectional view illustrating an example in which the wrist rest 24 is attached to the embedding apparatus 10 and the cassette 42 is placed on the hot plate 14. An example of the cassette 42 is illustrated in a perspective view in Fig. 9.

The lid opening mechanism 36 includes one end portion 36a provided at a position where a height in the vertical direction is lower than a bottom surface 42c of the lid 42A provided so as to be openable and closable on a main body 42B of the cassette 42 with the cassette 42 in which the lid 42A is closed placed at a predetermined position on the hot plate 14, and an inclined surface 36b extending from the one end portion 36a to a position higher than the bottom surface 42c of the lid 42A in the vertical direction.

The inclined surface 36b is configured to be inclined in the direction parallel to the direction opposite to the cassette 42, that is, in the front-rear direction. As an example, a distal end of the one end portion 36a is formed to have a substantially V-shaped cross section (cross-sectional shape when taken along a plane perpendicular to the left and right direction), that is, a tapered shape having an acute angle (see Fig. 8).

In this configuration, by performing such an operation that a front end 42a of the lid 42A of the cassette 42 is brought into contact with the inclined surface 36b of the lid opening mechanism 36, and then the cassette 42 is pulled forward from this state, whereby the front end 42a of the lid 42A is raised along the inclined surface 36b, thereby achieving an opening action of the lid 42A.

In this manner, according to the lid opening mechanism 36 described above, the lid 42A can be opened only by moving the cassette 42 so as to be pulled forward by the other hand while holding the tweezers with one hand. Therefore, since the lid 42A of the cassette 42 can be opened without returning the tweezers held in the hand to the holder 15, the operation can be simplified, and the operating time is reduced.

In addition, the lid opening mechanism 36 includes a flip-flop preventing part 37 formed into a canopy top shape above a position of the inclined surface 36b in the vicinity of the portion aligned in height in the vertical direction with the bottom surface 42c of the lid 42A.

Here, when the lid 42A is opened by the lid opening mechanism 36, the lid 42A may flip up due to the opening force. However, according to the flip-flop preventing part 37 described above, when the lid 42A flips up, a top surface 42b of the lid 42A comes into contact with a bottom surface 37a of the canopy top shaped flip-flop preventing part 37, so that an effect of suppressing the flip-flop movement is achieved. In this configuration, the flip-flop movement of the lid 42A which may occur as a problem specific for opening of the lid 42A by the lid opening mechanism 36 can be prevented, so that splashing of the sample caused by the flip-flop movement of the lid 42A can be prevented.

Second Example

Subsequently, the wrist rest 24 according to a second example, which is not according to the present invention, will be described.

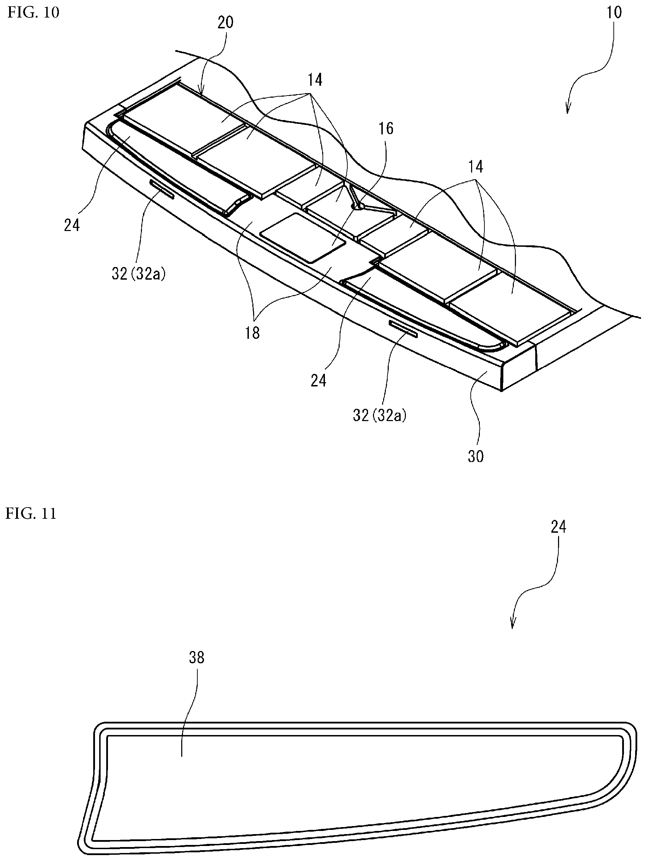

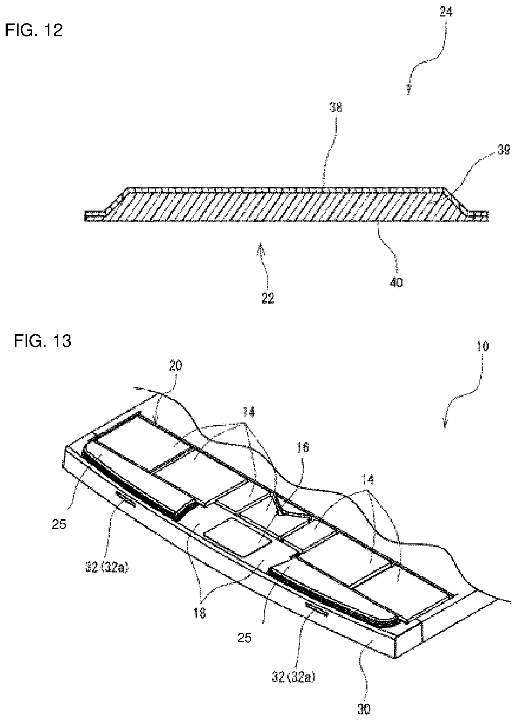

Fig. 11 is a plan view illustrating an example of the wrist rest 24 according to the present example, and Fig. 12 is a cross-sectional view of the same. Fig. 10 is a perspective view (schematic drawing) illustrating an example in which the wrist rest 24 is attached to the embedding apparatus 10. Although the wrist rest 24 has a pair of configurations arranged symmetrically, only one of them is illustrated and described because the contents thereof overlap with each other.

The wrist rest 24 according to the present example is common to the wrist rest 24 according to the first embodiment in plan view (see Figs. 3 and 10). On the other hand, the wrist rest 24 according to the present example illustrated in Fig. 11 and Fig. 12 is provided with a pressure-sensitive adhesive surface formed on a bottom surface portion 40 by using a pressure-sensitive adhesive material. The pressure-sensitive adhesive surface of the bottom surface portion constitutes the attachment mechanism 22 of the wrist rest 24 according to the present example, In this configuration, attachment and detachment of the wrist rest 24 can be carried out easily by sticking and peeling the bottom surface portion 24c of the wrist rest 24 to and from the hand-rest part 18.

Further, the wrist rest 24 according to the present example has an elastic material in a central portion 39 between a top surface portion 38 and the bottom surface portion 40. In this configuration, cushioning property may be enhanced by providing the wrist rest 24 with elasticity.

It should be noted that, in the present example, the central portion 39 and the bottom surface portion 40 are formed of urethane gel which also serves as both an elastic material and a pressure-sensitive adhesive material, but may also be formed of different materials, respectively. The wrist rest 24 having a desired elasticity or pressure-sensitive adhesive property can be produced by selecting a material as appropriate.

Further, the top surface portion 38 of the wrist rest 24 according to the present example is made of a resin material having a convex shape protruding upward. In this configuration, the entire part may be maintained to have a protruding shape while providing the central portion 39 with elasticity.

In the present example, the top surface portion 38 is made of a urethane leather having a non-pressure-sensitive adhesive property and a low frictional resistance. In this configuration, the operator's hand (glove) can be prevented from sticking to or being caught on the wrist rest 24.

According to the configuration described above, the wrist rest 24 according to the present example can easily be attached and detached to and from the wrist rest 24 by the pressure-sensitive adhesive force of the bottom surface portion 40. In addition, the wrist rest 24 having a desired elasticity or pressure-sensitive adhesive property can be produced.

### [Wrist-rest cushion]

Subsequently, a wrist-rest cushion 25 according to the embodiment of the present invention will be described. The wrist-rest cushion 25 is detachably attached onto the wrist rest 24.

The wrist-rest cushion 25 according to the embodiment of the present invention may be provided on the wrist rest 24 according to the first embodiment or may be provided on the wrist rest 24 according to the second example. An example in which the wrist-rest cushion 25 is attached to the wrist rest 24 according to the second example is illustrated in a perspective view in Fig. 13.

The wrist-rest cushion 25 is provided with the attachment mechanism 22 configured to attach the wrist-rest cushion 25 at a position covering the wrist rest 24 entirely or partly.

Here, the configuration of the wrist-rest cushion 25 may be the same as the configuration of the wrist rest 24 according to the second example (see Fig. 13). In this case, the pressure-sensitive adhesive surface of the bottom surface portion 40 formed by using the pressure-sensitive adhesive material constitutes the attachment mechanism 22 of the wrist-rest cushion 25.

The wrist-rest cushion 25 may be stuck onto the wrist rest 24 by means of the pressure-sensitive adhesive force of the bottom surface portion 40 to perform overlaying, so that the thickness of the wrist rest 24 can be adjusted easily and selectively.

Further, the wrist-rest cushion 25 having a desired elasticity or pressure-sensitive adhesive property can be produced by appropriately selecting a material, and as a result, the cushioning property of the wrist rest 24 can be easily and selectively adjusted by sticking the wrist-rest cushion 25 having such properties onto the wrist rest 24 to perform overlaying.

As described above, according to the wrist rest according to the present invention, a wrist rest which is easily detachable and attachable onto and from the hand-rest part on the embedding apparatus can be realized by the attachment mechanism (the engagement mechanism or the pressure-sensitive adhesive force). In this configuration, the thickness over the hand-rest part can be adjusted easily. Further, by sticking the wrist-rest cushion having elasticity onto the wrist rest to perform overlaying, the thickness and cushioning property of the wrist rest can be easily and selectively adjusted. As a result, the original purpose of the hand-rest part or the wrist rest is achieved for any operator, so that fatigue of the hand is reduced, and the precise embedding operation can be performed more easily.

## Claims

1. A wrist rest (24) to be detachably attached onto an embedding apparatus (10) configured to dispense and embed an embedding material into an embedding tray, the wrist rest (24) comprising:
an attachment mechanism (22) configured to attach the wrist rest (24) to a hand-rest part (18) of the embedding apparatus (10) at a position covering the hand-rest part (18) entirely or partly,
and wherein the attachment mechanism (22) is an engaging piece which is disposed at front and rear positions or at right and left positions of the wrist rest (24) with the hand-rest part (18) interposed therebetween and is an engaging piece configured to engage a predetermined portion of the embedding apparatus (10),
and **characterized in that**
the engagement piece comprises both (i) an engagement groove (28) which a protrusion (26) disposed at a predetermined portion of the embedding apparatus (10) engages, and (ii) an engagement protrusion (34) which an engagement hole (32) disposed at a predetermined portion of the embedding apparatus (10) engages.

2. The wrist rest (24) according to claim 1 , wherein a top surface of the wrist rest (24a) is formed in an inclined shape declining toward an end of the embedding apparatus (10).

3. The wrist rest (24) according to claim 1 or 2, comprising a lid opening mechanism (36) for opening a lid (42A) of a cassette (42) configured to accommodate a sample, wherein the lid opening mechanism (36) includes one end portion (36a) provided at a position lower than a bottom surface (42c) of the lid (42A) in a state in which the cassette (42) closed by the lid (42A) is placed at a predetermined position on a hot plate configured to heat the embedding tray, and an inclined surface (36b) extending from the one end portion (36a) to a position higher than the bottom surface (42c) of the lid (42A), the lid opening mechanism (36) being located on the rear side of the wrist rest (24).

4. The wrist rest (24) according to claim 3, wherein the inclined surface (36b) is inclined in a front-rear direction of the wrist rest (24) parallel to a direction opposing the cassette (42).

5. The wrist rest (24) according to claim 3 or 4, wherein the lid opening mechanism (36) includes a flip-flop preventing part (37) formed into a canopy top shape above a position of the inclined surface (36b) in the vicinity of a portion aligned in height with the bottom surface (42c) of the lid (42A).

6. The wrist rest (24) according to any one of claims 1-5, wherein the wrist rest (24) further comprises a wrist-rest cushion (25) attachable to and detachable from said wrist-rest (24), wherein the wrist-rest cushion (25) comprises an attachment mechanism (22) configured to attach the wrist-rest cushion (25) onto the wrist rest (24) at a position covering the wrist rest (24) entirely or partly, wherein a top surface portion (38) of the wrist-rest cushion (25) is made of a resin material having a convex shape protruding upward, and a bottom surface portion (40) of the wrist-rest cushion (25) is made of a resin material which serves as both an elastic material and a pressure-sensitive adhesive material, and wherein an elastic material is disposed between the top surface portion (38) and the bottom surface portion (40) and wherein the pressure-sensitive adhesive surface of the bottom surface portion (40) constitutes the attachment mechanism (22) of the wrist-rest cushion (25).

## Patentansprüche

1. Handgelenkauflage (24), zur lösbaren Befestigung an einer Einbettungsvorrichtung (10), die dazu ausgelegt ist, ein Einbettungsmaterial in eine Einbettungsschale abzugeben und in dieser einzubetten, wobei die Handgelenkauflage (24) Folgendes umfasst:
einen Befestigungsmechanismus (22), der dazu ausgelegt ist, die Handgelenkauflage (24) auf einem Handauflageteil (18) der Einbettungsvorrichtung (10) in einer Position, in der der Handauflageteil (18) vollständig oder teilweise bedeckt ist, zu befestigen
und wobei der Befestigungsmechanismus (22) ein Eingriffsstück ist, das an einer vorderen und hinteren Position oder an einer rechten und linken Position der Handgelenkauflage (24) angeordnet ist, wobei der Handauflageteil (18) dazwischen angeordnet ist und ein Eingriffsstück ist, das dazu ausgelegt ist, mit einem vorbestimmten Abschnitt der Einbettungsvorrichtung (10) in Eingriff zu gelangen,
und **dadurch gekennzeichnet, dass**
das Eingriffsstück sowohl (i) eine Eingriffsnut (28), die mit einem Vorsprung (26), der in einem vorbestimmten Abschnitt der Einbettungsvorrichtung (10) angeordnet ist, in Eingriff steht, als auch (ii) einen Eingriffsvorsprung (34), der mit einem Eingriffsloch (32), das in einem vorbestimmten Abschnitt der Einbettungsvorrichtung (10) angeordnet ist, in Eingriff steht, umfasst.

2. Handgelenkauflage (24) nach Anspruch 1, wobei eine obere Fläche der Handgelenkauflage (24a) mit einer geneigten Form ausgebildet ist, die in Richtung eines Endes der Einbettungsvorrichtung (10) abfällt.

3. Handgelenkauflage (24) nach Anspruch 1 oder 2, umfassend einen Deckelöffnungsmechanismus (36) zum Öffnen eines Deckels (42A) einer Kassette (42), die dazu ausgelegt ist, eine Probe aufzunehmen, wobei der Deckelöffnungsmechanismus (36) einen Endabschnitt (36a) umfasst, der in einer Position unterhalb einer unteren Fläche (42c) des Deckels (42A) in einem Zustand, in dem die von dem Deckel (42A) geschlossene Kassette (42) in einer vorbestimmten Position auf einer Wärmeplatte platziert ist, die zum Wärmen der Einbettungsschale ausgelegt ist, bereitgestellt ist, und eine geneigte Oberfläche (36b), die sich von dem einen Endabschnitt (36a) aus in eine Position oberhalb der unteren Oberfläche (42c) des Deckels (42A) aus erstreckt, wobei sich der Deckelöffnungsmechanismus (36) auf der Rückseite der Handgelenkauflage (24) befindet.

4. Handgelenkauflage (24) nach Anspruch 3, wobei die geneigte Oberfläche (36b) in eine Vorne-hinten-Richtung der Handgelenkauflage (24) parallel zu einer zur Kassette (42) entgegengesetzten Richtung geneigt ist.

5. Handgelenkauflage (24) nach Anspruch 3 oder 4, wobei der Deckelöffnungsmechanismus (36) einen Kippverhinderungsteil (37) umfasst, der zu einer Kappenoberteilform oberhalb einer Position der geneigten Oberfläche (36b) in der Nähe eines Abschnitts, der höhenmäßig mit der unteren Oberfläche (42c) des Deckels (42A) fluchtend ausgerichtet ist, ausgebildet ist.

6. Handgelenkauflage (24) nach einem der Ansprüche 1 bis 5, wobei die Handgelenkauflage (24) ferner ein Handgelenkauflagekissen (25) umfasst, das an der Handgelenkauflage (24) befestigbar und davon lösbar ist, wobei das Handgelenkauflagekissen (25) einen Befestigungsmechanismus (22) umfasst, der dazu ausgelegt ist, das Handgelenkauflagekissen (25) auf der Handgelenkauflage (24) in einer Position, in der die Handgelenkauflage (24) vollständig oder teilweise bedeckt ist, zu befestigen, wobei ein Abschnitt einer oberen Fläche (38) des Handgelenkauflagekissens (25) aus einem Harzmaterial mit einer konvexen Form, die nach oben hin wegsteht, gefertigt ist und ein Abschnitt einer unteren Fläche (40) des Handgelenkauflagekissens (25) aus einem Harzmaterial gefertigt ist, das sowohl als elastisches Material als auch als druckempfindliches Haftmaterial dient, und wobei ein elastisches Material zwischen dem Abschnitt der oberen Fläche (38) und dem Abschnitt der unteren Fläche (40) angeordnet ist und wobei die druckempfindliche Haftoberfläche des Abschnitts der unteren Fläche (40) den Befestigungsmechanismus (22) des Handgelenkauflagekissens (25) bildet.

## Revendications

1. Repose-poignet (24) à fixer de manière amovible sur un appareil d'incorporation (10) configuré pour distribuer et incorporer un matériau d'incorporation dans un plateau d'incorporation, le repose-poignet (24) comprenant :
un mécanisme de fixation (22) configuré pour fixer le repose-poignet (24) à une partie de repose-main (18) de l'appareil d'incorporation (10) au niveau d'une position recouvrant la partie de repose-main (18) entièrement ou partiellement, et dans lequel le mécanisme de fixation (22) est une pièce de mise en prise qui est disposée au niveau de positions avant et arrière ou au niveau des positions droite et gauche du repose-poignet (24) avec la partie de repose-main (18) interposée entre elles et est une pièce de mise en prise configurée pour mettre en prise une partie prédéterminée de l'appareil d'incorporation (10), et **caractérisé en ce que** la pièce de mise en prise comprend à la fois (i) une rainure de mise en prise (28) avec laquelle une saillie (26) disposée au niveau d'une partie prédéterminée de l'appareil d'incorporation (10) vient en prise, et (ii) une saillie de mise en prise (34) avec laquelle un trou de mise en prise (32) disposé au niveau d'une partie prédéterminée de l'appareil d'incorporation (10) vient en prise.

2. Repose-poignet (24) selon la revendication 1, dans lequel une surface supérieure du repose-poignet (24a) est formée selon une forme inclinée déclinant vers une extrémité de l'appareil d'incorporation (10).

3. Repose-poignet (24) selon la revendication 1 ou 2, comprenant un mécanisme d'ouverture de couvercle (36) pour ouvrir un couvercle (42A) d'une cassette (42) configurée pour recevoir un échantillon, dans lequel le mécanisme d'ouverture de couvercle (36) inclut un partie d'extrémité (36a) prévue à une position inférieure à une surface inférieure (42c) du couvercle (42A) dans un état dans lequel la cassette (42) fermée par le couvercle (42A) est placée dans une position prédéterminée sur une plaque chauffante configuré pour chauffer le plateau d'incorporation, et une surface inclinée (36b) s'étendant depuis la partie d'extrémité (36a) vers une position plus élevée que la surface inférieure (42c) du couvercle (42A), le mécanisme d'ouverture du couvercle (36) étant situé sur la face arrière du repose-poignet (24).

4. Repose-poignet (24) selon la revendication 3, dans lequel la surface inclinée (36b) est inclinée dans une direction avant-arrière du repose-poignet (24) parallèle à une direction opposée à la cassette (42).

5. Repose-poignet (24) selon la revendication 3 ou 4, dans lequel le mécanisme d'ouverture de couvercle (36) inclut une partie anti-bascule (37) formée en une forme supérieure de auvent au-dessus d'une position de la surface inclinée (36b) à proximité d'une partie alignée en hauteur avec la surface inférieure (42c) du couvercle (42A).

6. Repose-poignet (24) selon l'une quelconque des revendications 1 à 5, dans lequel le repose-poignet (24) comprend en outre un coussin de repose-poignet (25) pouvant être fixé audit repose-poignet (24) et détaché de celui-ci, dans lequel le coussin de repose-poignet (25) comprend un mécanisme de fixation (22) configuré pour fixer le coussin de repose-poignet (25) sur le repose-poignet (24) dans une position recouvrant entièrement ou partiellement le repose-poignet (24), dans lequel une partie de surface supérieure (38) du coussin de repose-poignet (25) est constituée d'un matériau en résine présentant une forme convexe faisant saillie vers le haut, et une partie de surface inférieure (40) du coussin de repose-poignet (25) est constituée d'un matériau en résine qui sert à la fois de matériau élastique et de matériau adhésif sensible à la pression, et dans lequel un matériau élastique est disposé entre la partie de surface supérieure (38) et la partie de surface inférieure (40) et dans lequel la surface adhésive sensible à la pression de la partie de surface inférieure (40) constitue le mécanisme de fixation (22) du coussin de repose-poignet (25).
